(19) Europäisches Patentamt
European Patent Office
Office européen des brevets

(11) **EP 2 017 125 B1**

(12) **EUROPEAN PATENT SPECIFICATION**

(45) Date of publication and mention
of the grant of the patent:
**02.11.2011 Bulletin 2011/44**

(51) Int Cl.:
***B60Q 1/40*** *(2006.01)*

(21) Application number: **08012918.2**

(22) Date of filing: **17.07.2008**

(54) **Vehicle turn indicators**

Fahrrichtungsanzeige für Kraftfahrzeuge

Indicateurs de changement de direction pour véhicule

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **17.07.2007 GB 0713834**

(43) Date of publication of application:
**21.01.2009 Bulletin 2009/04**

(73) Proprietor: **AGCO GmbH**
**87616 Marktoberdorf (DE)**

(72) Inventors:
• **Ensslin, Johannes**
**87616 Marktoberdorf (DE)**

• **Bauer, Stefan**
**87468 Aitrange (DE)**

(74) Representative: **Morrall, Roger**
**AGCO Limited**
**Abbey Park**
**Stoneleigh**
**Kenilworth CV8 2TQ (GB)**

(56) References cited:
**DE-A1- 19 941 308      US-A- 4 333 071**
**US-A- 5 260 685        US-A- 5 528 218**
**US-A1- 2006 187 016**

**Description**

This invention relates to vehicle turn indicators and in particular, though not exclusively, to such turn indicators for use with longer vehicles such as tractors towing one or more trailers or long commercial lorries.

Problems arise with the deactivation of such turn indicators of which can lead to potentially dangerous premature deactivation.

US-A-5528218 discloses an electronic self-cancelling turn signal device for a semi-tractor/trailer truck which prevents any premature cancelling of the turn signal. Cancellation of the turn signal occurs under the action of a timer at a predetermined time after the tractor has completed a turn so that any trailer towed by the tractor will complete the turn before the turn signal is cancelled. Also, US2006/187016A1 discloses a turn indicator system for a vehicle steered by a joystick in which the flashing turn indicator is automatically turned off if the steering angle of the vehicle becomes equal to or more than a predetermined first steering angle and thereafter becomes equal to or less than a predetermined second smaller steering angle.

It is an object of the present invention to provide a vehicle turn indicator system which overcomes the above problem.

Thus according to the present invention there is provided a turn indicator system for a vehicle with steerable wheels, the system comprising left and right turn indicators, a manual turn indicator initiating means to manually activate or deactivate the operation of the turn indicators, deactivation means to deactivate the indicators; sensing means to sense the steering angle of the wheels, and electronic control means which receives the steering angle signal and which controls the de-activation of the operation of the turn indicators, the system being **characterised in that** mechanical deactivation means are linked to a steering wheel to deactivate the indicators automatically and the electronic control means switches the deactivation of the turn indicators to electronic control when the steering angle exceeds a first predetermined value and deactivates the operation of the turn indicators when the steering angle falls to a second predetermined value.

It has been recognised that the angle of the steering wheel of a vehicle is not determinate of the actual steering angle of the steerable wheels, especially in hydraulically assisted steering. This is caused by leakages in the hydraulic circuits and the presence of pressure relief valves. By measuring the actual steering angle, the measurement can be exploited to control the deactivation of the turn indicators.

It has been further recognised that such electronic control of the turn indicator deactivation is only necessary for large turns when premature deactivation can be particularly dangerous. Therefore, the electronic control only takes over from the mechanical deactivation when the steering angle reaches the first predetermined value. For turns not exceeding that steering angle, the conventional mechanical deactivation means is satisfactory.

Conveniently the first predetermined value of the steering angle signal is of the order of 12 degrees and the second predetermined value is of the order of 3.5 degrees.

Also, when the deactivation operation of the turn indicator is switched to electronic control. the electronic control means may be arranged to receive a signal indicative of the vehicle speed and adjusts the length of operation of the operative turn indicator dependent on the vehicle speed.

The electronic control means may be arranged to receive a signal indicative as to whether the vehicle is towing one or more trailers and adjusts the length of operation of the operative turn indicator to take account of trailer length.

The vehicle operator may enter the length of the trailer or trailers being towed by the vehicle into the control means. Alternatively the control means may set a default length for the or each trailer.

The control system may automatically increase the set or default length of the or each trailer by a predetermined safety margin.

The present invention will now be described, by way of example only, with reference to the accompanying drawings in which:-

Figure 1 show diagrammatically a trailer with a turn indicator system in accordance with the present invention and two trailers attached;

Figure 2 shows a simple left turn sequence for a tractor having a turn indicator system in accordance with the present invention;

Figure 3 show an overtaking manoeuvre for a tractor with a turn indicator system in accordance with the present invention; and,

Figure 4 shows a left turn sequence, using a turn lane, for a tractor with a turn indicator system in accordance with the present invention.

Referring to the drawings, a tractor 10 has front steerable wheels 11 which are steered by a hydraulic steering cylinder 12 control by a steering motor 13 operated by a steering wheel 14. The steering motor 13 is supplied with pressurised hydraulic fluid by a pump 15 from a reservoir 16. As is well known, the wheels 11 can be turned through an angle θ by admitting pressurised fluid into one end or the other of steering cylinder 12 via line 17 or 18 to displace piston 19 within cylinder 12 and hence turn steering knuckles 20 about their pivot axes 21 from their solid line straight ahead position to their turned dotted line positions 20'.

There is thus no direct mechanical connection between the movements of the steering wheel 14 and the wheels 11 and thus, due for example to leakage from cylinder 12, there is not constant "straight ahead" position of the steering wheel which corresponds to a "straight ahead" position of the wheels. This can cause problems with any turn indicator system fitted to the tractor, particularly with any automatic turn indicator deactivation.

The tractor 10 is also provided with left and right turn indicators 23 and 24 which are controlled by the normal manually operated turn indicator unit 25 operated by a lever 25a mounted on the steering wheel column 26.

This turn indicator unit 25 uses the conventional mechanical reset for the indicators 23,24 using a pin or other member which turns with the steering wheel 14 and mechanically switches the indicators off in an automatic manner.

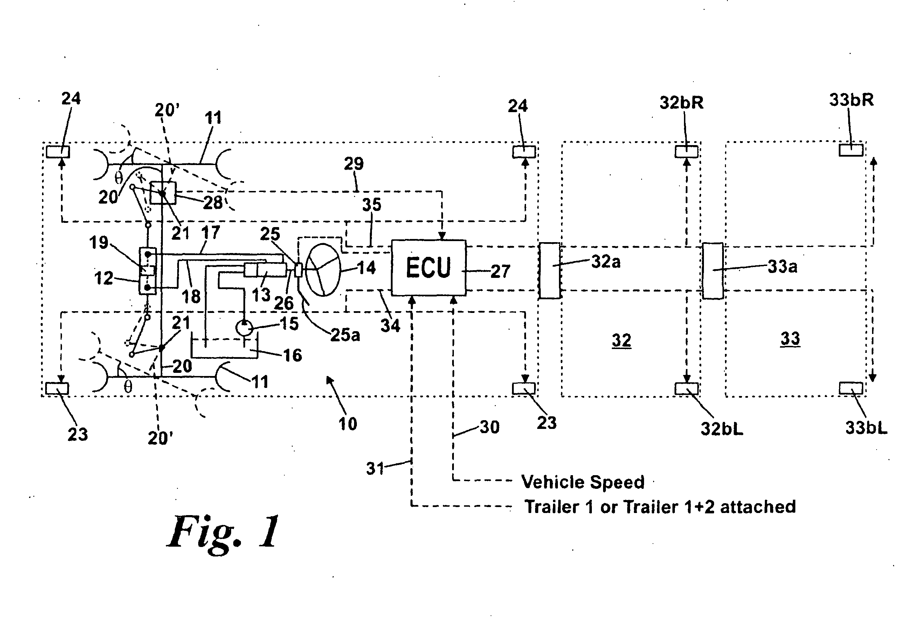

In accordance with the present invention, an electronic control unit 27 is provided which receives inputs from a steering angle sensor 28 via line 29, a vehicle speed signal via line 30 and a signal indicative as to whether one or two trailers are connected to the tractor via line 31. Figure 1 shows an arrangement in which a first trailer 32 and a second trailer 33 are connected with the tractor and these trailers have electrical connectors 32a and 33a by which the turn indicators 32bL, 32bR and 33bL, 33bR of these trailers are connected with the electronic control unit 27 on the tractor. The left and right turn indicators 23 and 24 of the tractor are also connected with electronic control unit 27 via lines 34 and 35 respectively.

As will be appreciated, the signal in line 31 as to whether the tractor is towing one or two trailers could be provided automatically if connectors 32a and 33a are in use or could be provided manually by the tractor driver.

The electronic control unit 27 operates using the following control algorithm:-

> 1. The turn indicators on the tractor and trailers (if fitted) are always turned on by the turn indicator lever 25a.

> 2. For small turn angles θ, measured by sensor 28, in the range 0 degrees up to a first predetermined turn angle of X degrees (where X has a typical value of, for example, 12 degrees) the turn indicators are turned-off automatically by the mechanical turn indicator unit 25.

> 3. For larger turn angles θ above X degrees the electronic control unit 27 is activated to control the turning-off of the operative turn indicators and the indicators are not turned-off until the steering angle θ has fallen to a second predetermined angle Y which is typically, for example, of the order of 3.5 degrees.

> 4. When one or two trailers are attached to the tractor the control algorithm also includes a time delay function which delays the turning-off of the operative indicators after the steering angle has fallen to angle Y by a time period dependent on the total length of the tractor and trailer(s).

This time delay (t) can be calculated using the simple formula

$$t = \frac{L1 + L2}{V}$$

where L1 and L2 are the lengths of the two trailer connected to the tractor (including a safety margin) and V is the velocity of the tractor.

The actual lengths of the trailers can be entered into the electronic control unit 27 manually by the driver or the control unit can assume a default value of say 5 metres for each trailer and the control unit will also apply an additional safety margin of 2 metres for each trailer giving default values of L1 and L2 of 7 metres each. Alternatively, electrical connectors 32a and 33a can form part of a known form of trailer recognition system which notifies the tractor as to exactly what type of trailer is connected and which, for example, identifies its length.

As will be appreciated, the above formula assumes a constant tractor speed but in practice the tractor will accelerate out of the curve and this can be taken into account using integral calculus if desired.

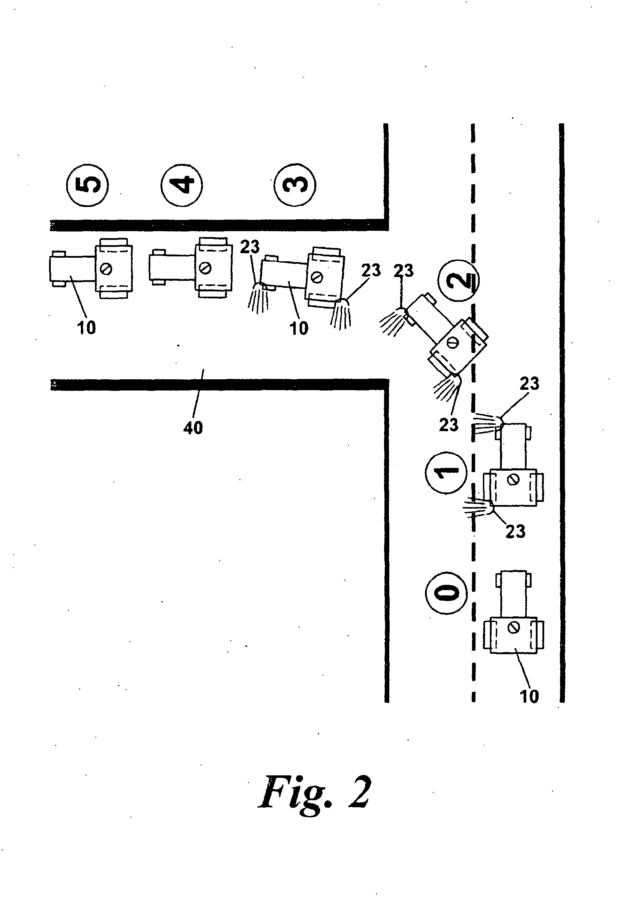

The reason for the turn indicators being reset mechanically for small turn angles is to avoid undesirable deactivation of the turn indicators when undertaking certain manoeuvres as illustrated in the accompanying Figures 2 to 4.

Referring to Figure 2, this shows a.tractor 10 making a left hand turn into a side road 40. Five positions of the tractor are shown. In position 0 the tractor is driving straight ahead on the road and the steering angle is about 0 degrees. At position 1 the driver operates the signal lever 25a to activate the mechanical turn indicator unit 25 which switches on the left turn indicators 23 and the steering angle is again approximately 0 degrees.

At position 2 the tractor is turning and the steering angle sensed by sensor 28 exceeds the first predetermined level of 12 degrees so that the electronic control unit is activated to control the turning-off of the turn indicators. At position 3 the steering angle is still greater than 3.5 degrees and the turn indicators 23 are therefore still flashing. At position 4 the turn is almost complete and the steering angle is less than 3.5 degrees and the electronic control unit has turned off the turn indicators 23. At position 5 the turn indicating procedure is finished and the steering angle is again approximately 0 degrees as at position 0. The above described procedure is for a straight forward turn with a steering angle in excess of 12 degrees.

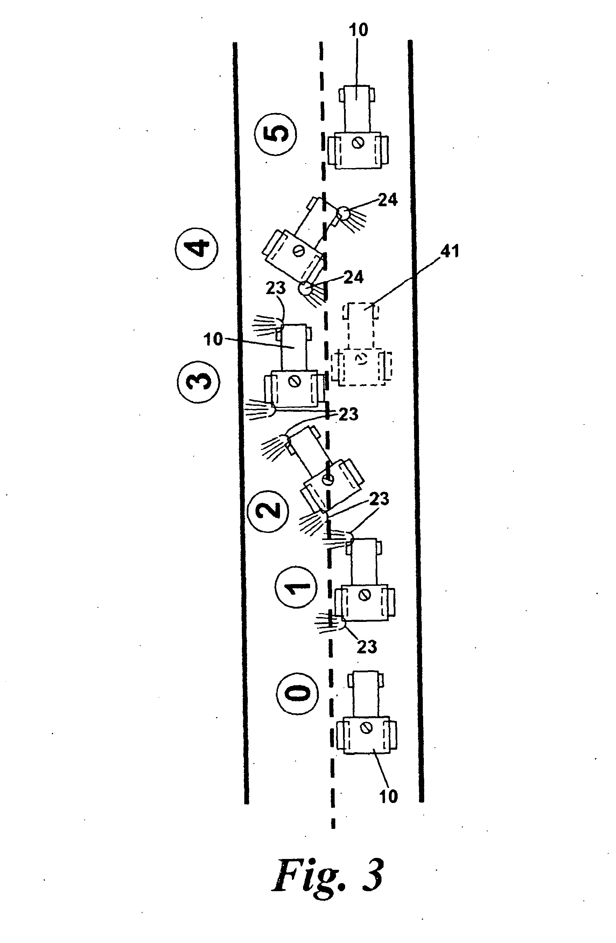

If a manoeuvre is undertaken at which the steering angle never exceeds 12 degrees, as for example in a simple overtaking manoeuvre which is shown in Figure 3, the electronic control unit will never be activated to take over control of the switching off of the turn indicators. In Figure 3 five positions of the tractor 10 are shown as the tractor attempts to overtake another vehicle 41. In position 0 the tractor is driving straight forward with a steering angle of about 0 degrees. In position I the driver switches on the turn indicators 23 using lever 25a to indicate that he is about to commence an overtaking manoeuvre and the steering angle still remains at approximately 0 degrees. At position 2 the tractor pulls out into the other lane to begin the overtaking manoeuvre with the turn indicators 23 flashing and a steering angle of less than 12 degrees so that the operation of the electronic control unit 27 to take over the turning-off of the turn indicators is not activated. At position 3 the tractor is opposite the vehicle 41 which is to be overtaken with the indictors 23 still flashing and the steering angle at approximately 0 degrees. At position 4 the tractor moves back into its normal road lane with the right turn indicators 24 flashing and at a steering angle of less than 12 degrees. At position 5 the overtaking manoeuvre is complete and the turn indicators have been turned-off either automatically by the unit 25 or manually using the lever 25a and the tractor is in a similar position to that shown at position 0.

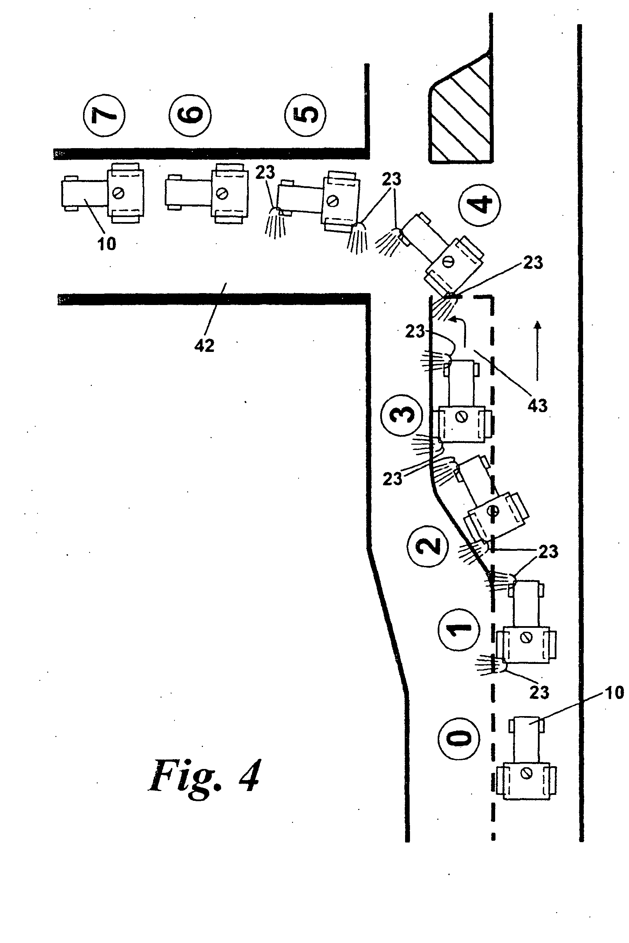

Figure 4 shows the position which a left turn is being made into a side road 42 using an overtaking lane 43 with seven positions of the tractor being shown.

At position 1 the tractor 10 is driving in the straight ahead position with a steering angle of approximately 0 degrees. In position 2 the driver initiates operation of the turn indicators 23 using lever 25a to indicate that he is about to turn to the left into side road 42 and the steering angle is still approximately 0 degrees. At position 2 the tractor steers into the turn lane 43 with the indicators 23 still flashing with a turn angle of less then 12 degrees so that the electronic control unit is not activated to take over the switching off of the flashing indicators. At position 3 the tractor is driving in the straight ahead position in the turn lane 43 with the indicators 23 still flashing and the steering angle of approximately 0 degrees. At position 4 the tractor commences the turn into the side road 43 with the indicators 23 still flashing and the turn angle now exceeds 12 degrees so the electronic control unit is activated to take over the switching off of the flashing indicators 23. At position 5 the turn into the side road is not yet complete and the steering angle is still more than 3.5 degrees so that the indicators 23 continue to flash. At position 6 the steering angle is now below 3.5 degrees and the electronic control unit has switched off the turn indicators 23. In position 7 the turn is complete and the steering angle is approximately 0 degrees corresponding to the condition of position 0.

As indicated above, if the tractor is pulling one or two trailers then the deactivation of the indicators by the electronic control unit it delayed in accordance with the details section 4 of the above described control algorithm. This delay takes account of both the length of the tractor and trailers and the velocity at which the tractor is moving. Thus ensuring that the indicators are not prematurely deactivated which could be potentially dangerous.

Although the invention has been described above in relation to a tractor in which the wheels are turned by a hydraulic cylinder 12 with no direct mechanical connection between the movements of the steering wheel and the steering wheels of the vehicle, the invention is generally applicable to long vehicles such as long commercial lorries etc and, once the operation of the electronic control unit to switch off the turn indicators has been activated, the time period during which the turn indicators remain flashing can be extended to take into account the extreme length and/or speed of the commercial vehicle.

In another embodiment in accordance with another aspect of the invention, the mechanical deactivation means is omitted and the control means receives a signal indicative as to whether the vehicle is towing one or more trailers and adjusts the length of operation of the turn indicator to take account of trailer length.

In summary, there is provided a turn indicator system for a vehicle with steerable wheels. The system comprises a manual turn indicator initiating means to manually activate or deactivate the operation of turn indicators, mechanical deactivation means linked to a steering wheel to deactivate the indicators automatically, and sensing means to sense the steering angle of the wheels. Electronic control means are provided to receive the steering angle signal and switch the de-activation of the operation of the turn indicators to electronic control when the steering angle signal exceeds a first predetermined value. When under electronic control any deactivation demand from the mechanical deactivation means is disregarded and electronic deactivation only occurs when the steering angle signal falls to a second predetermined value.

**Claims**

1.  A turn indicator system for a vehicle with steerable wheels (11), the system comprising

    - left and right turn indicators (23,24),
    - a manual turn indicator initiating means (25,25a) to manually activate or deactivate the operation of the turn indicators,
    - deactivation means to deactivate the indicators;
    - sensing means (28) to sense the steering angle (θ) of the wheels (11), and
    - electronic control means (27) which receives the steering angle signal and which controls the de-activation of the operation of the turn indicators (23,24), the system being **characterised**

**in that** mechanical deactivation means are linked to a steering wheel (14) to deactivate the indicators automatically and **in that** the electronic control means (27) switches the deactivation of the turn indicators (23,24) to electronic control when the steering angle (θ) exceeds a first predetermined value and deactivates the operation of the turn indicators when the steering angle falls to a second predetermined value.

2. A turn indicator system according to Claim 1 in which the control means (27) receives a signal (30) indicative of the vehicle speed and adjusts the length of operation of the turn indicator dependant on the vehicle speed.

3. A turn indicator system according to Claim 1 or 2 in which the control means (27) receives a signal (31, 32a, 33a) indicative as to whether the vehicle is towing one or more trailers (32,33) and adjusts the length of operation of the turn indicator to take account of trailer length.

4. A turn indicator system according to Claim 3 in which the vehicle operator can enter the length of the trailer or trailers being towed by the vehicle into the control means (27).

5. A turn indicator system according to Claim 3 in which the control means (27) automatically sets a default length for the or each trailer.

6. A turn indicator system according to Claim 4 or 5 in which the control means (27) automatically increases the set or default length of the or each trailer by a predetermined safety margin.

7. A turn indicator system according to Claim 3 in which the control means (27) receives a signal from an automatic trailer recognition system which indicates the length of the or each trailer connected to the vehicle.

**Patentansprüche**

1. Abbiege-Indikator-System für ein Fahrzeug mit lenkbaren Rädern (11) mit

   - Abbiege-Indikatoren (23, 24) für ein Abbiegen nach rechts und links,
   - einem manuellen Abbiege-Indikator-Initiierungs-Mittel (25, 25a) zur manuellen Aktivierung und Deaktivierung des Betriebs der Abbiege-Indikatoren,
   - mindestens einem Deaktivierungs-Mittel zum Deaktivieren der Indikatoren;
   - mindestens einem sensierenden Mittel (28) zum Sensieren des Lenkwinkels der Räder (11), und
   - mindestens einem elektronischen Steuerungs- oder Regelungs-Mittel (27), welches das Lenkwinkelsignal empfängt und die Deaktivierung des Betriebs der Abbiege-Indikatoren (23, 24) steuert oder regelt,

   **dadurch gekennzeichnet, dass** mechanische Deaktivierungs-Mittel mit einem Lenkrad (14) zum automatischen Deaktivieren der Indikatoren verbunden oder gekoppelt sind und dass das elektronische Steuerungs- oder Regelungsmittel (27) die Deaktivierung der Abbiege-Indikatoren (23, 24) zu der elektronischen Steuerung oder Regelung schaltet, wenn der Lenkwinkel einen ersten vorbestimmten Wert überschreitet, und den Betrieb der Abbiege-Indikatoren deaktiviert, wenn der Lenkwinkel auf einen zweiten vorbestimmten Wert fällt.

2. Abbiege-Indikator-System nach Anspruch 1, **dadurch gekennzeichnet, dass** das Steuerungs- oder Regelungsmittel (27) ein Signal (30) empfängt, welches von der Fahrzeuggeschwindigkeit abhängt oder diese indiziert und die Länge des Betriebs des Abbiege-Indikators in Abhängigkeit von der Fahrzeuggeschwindigkeit anpasst.

3. Abbiege-Indikator-System nach Anspruch 1 oder 2, **dadurch gekennzeichnet, dass** das Steuerungs- oder Regelungsmittel (27) ein Signal (31, 32a, 33a) empfängt, welches abhängt davon, ob das Fahrzeug einen oder mehrere Anhänger (32, 33) zieht, oder welches dieses indiziert, und die Länge des Betriebs des Abbiege-Indikators anpasst, um die Anhängerlänge zu berücksichtigen.

4. Abbiege-Indikator-System nach Anspruch 3, **dadurch gekennzeichnet, dass** der Fahrer oder Betreiber des Fahrzeugs die Länge des Anhängers oder der Anhänger, der oder die von dem Fahrzeug gezogen wird oder werden, in das Steuerungs- oder Regelungsmittel (27) eingeben kann.

5. Abbiege-Indikator-System nach Anspruch 3, **dadurch gekennzeichnet, dass** das Steuerungs- oder Regelungsmittel (27) automatisch eine Default-Länge für den oder jeden Anhänger setzt.

6. Abbiege-Indikator-System nach Anspruch 4 oder 5, **dadurch gekennzeichnet, dass** das Steuerungs- oder Regelungsmittel (27) automatisch die gesetzte Länge oder die Default-Länge des oder jedes Trailers um eine vorbestimmte Sicherheitsspanne erhöht.

7. Abbiege-Indikator-System nach Anspruch 3, **dadurch gekennzeichnet, dass** das Steuerungs- oder Regelungsmittel (27) ein Signal von einem automatischen Anhänger-Erkennungs-System empfängt, welches die Länge des oder jedes Trailers, der mit dem Fahrzeug verbunden ist, indiziert.


**Revendications**

1. Dispositif indicateur de changement de direction pour un véhicule équipé de roues directrices (11), le dispositif comprenant :

   des indicateurs de changement de direction gauche et droit (23, 24),
   un moyen d'initiation d'indicateur de changement de direction manuel (25, 25a) destiné à activer manuellement ou désactiver le fonctionnement des indicateurs de direction,
   des moyens de désactivation destinés à désactiver les indicateurs ;
   des moyens de détection (28) destinés à détecter l'angle de direction (e) des roues (11), et
   un moyen de commande électronique (27) qui reçoit le signal d'angle de direction et qui commande la désactivation du fonctionnement des indicateurs de changement de direction (23, 24), le dispositif étant **caractérisé en ce que** les moyens de désactivation mécaniques sont reliés à une roue directrice (14) afin de désactiver automatiquement les indicateurs et **en ce que** le moyen de commande électronique (27) commute la désactivation des indicateurs de changement de direction (23, 24) vers la commande électronique lorsque l'angle de direction (e) excède une première valeur prédéterminée et désactive le fonctionnement des indicateurs de changement de direction lorsque l'angle de direction chute à une seconde valeur prédéterminée.

2. Dispositif indicateur de changement de direction selon la revendication 1, dans lequel le moyen de commande (27) reçoit un signal (30) représentatif de la vitesse de véhicule et ajuste la durée de fonctionnement de l'indicateur de changement de direction en fonction de la vitesse de véhicule.

3. Dispositif indicateur de changement de direction selon la revendication 1 ou 2, dans lequel le moyen de commande (27) reçoit un signal (31, 32a, 33a) représentatif du fait que le véhicule tracte une ou plusieurs remorques (32, 33) et ajuste la durée de fonctionnement de l'indicateur de changement de direction afin de prendre en compte la longueur de remorque.

4. Dispositif indicateur de changement de direction selon la revendication 3, dans lequel le conducteur de véhicule peut entrer la longueur de la remorque ou des remorques tractées par le véhicule dans le moyen de commande (27).

5. Dispositif indicateur de changement de direction selon la revendication 3, dans lequel le moyen de commande (27) initialise automatiquement une longueur par défaut pour la ou chaque remorque.

6. Dispositif indicateur de changement de direction selon la revendication 4 ou 5, dans lequel le moyen de commande (27) augmente automatiquement la longueur initialisée ou par défaut de la ou chaque remorque d'une marge de sécurité prédéterminée.

7. Dispositif indicateur de changement de direction selon la revendication 3, dans lequel le moyen de commande (27) reçoit un signal à partir d'un dispositif de reconnaissance de remorque automatique qui indique la longueur de la ou chaque remorque couplée au véhicule.

*Fig. 1*

Vehicle Speed

Trailer 1 or Trailer 1+2 attached

*Fig. 2*

*Fig. 3*

*Fig. 4*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5528218 A

- US 2006187016 A1